# EUROPEAN PATENT SPECIFICATION

(11) **EP 0 544 251 B1**
(45) Date of publication and mention of the grant of the patent: **26.02.1997**
(21) Application number: 92120079.6
(22) Date of filing: 25.11.1992
(51) Int. Cl.: G02B 5/32, G03H 1/04, G03H 1/30

(54) **Hologram manufacturing method and apparatus**
Verfahren und Vorrichtung zum Herstellen eines Hologramms
Procédé de fabrication et dispositif pour la fabrication d'un hologramme

(30) Priority: 26.11.1991 JP 310893/91
(43) Date of publication of application: 02.06.1993
(73) Proprietor: CANON KABUSHIKI KAISHA, Tokyo (JP)
(72) Inventor: Sudo, Toshiyuki, c/o Canon Kabushiki Kaisha, Ohta-ku, Tokyo 146 (JP); Taniguchi, Naosato, c/o Canon Kabushiki Kaisha, Ohta-ku, Tokyo 146 (JP); Morishima, Hideki, c/o Canon Kabushiki Kaisha, Ohta-ku, Tokyo 146 (JP)
(74) Representative: Bühling, Gerhard, Dipl.-Chem.

(56) References cited:
- EP-A- 0 298 145
- EP-A- 0 450 644
- US-A- 3 807 829
- US-A- 4 964 684
- US-A- 5 016 951
- US-A- 5 040 864

## Description

The present invention relates to a hologram manufacturing apparatus and a hologram manufacturing method. Especially, the invention relates to them by a repeatedly exposing method.

### Related Background Art

A hologram optical device is generally a diffraction grating manufactured in a manner to record an interference fringe of a light beam on a photosensitive material, is used for the purpose of condensing, focusing and spectrometering a light beam, and includes a hologram lens, a holographic headup display and a holographic helmet mounted display. In the prior art, the hologram optical device has been manufactured by a two-beam exposure method. However, when the hologram optical element manufactured by the two-beam exposure method is used as a focusing element as it is, an aberration occurs and a correction of the aberration is needed.

As one method of correcting the aberration, a hologram manufacturing method for manufacturing a hologram optical device by a repeatedly exposing method has been proposed. In this hologram manufacturing method, a hologram plane is divided into a plurality of appropriate areas in a design step of the hologram optical device, an optimum exposure optical system is designed for each area, and in exposing a light beam, an aperture to each area is formed by a light shielding plate having an aperture of a specific shape, and an laser light source is moved to an optimum position. Those steps are repeated. Since this hologram manufacturing method increases a freedom of design, it is expected as a hologram manufacturing method which greatly contributes to the improvement of an aberration characteristic.

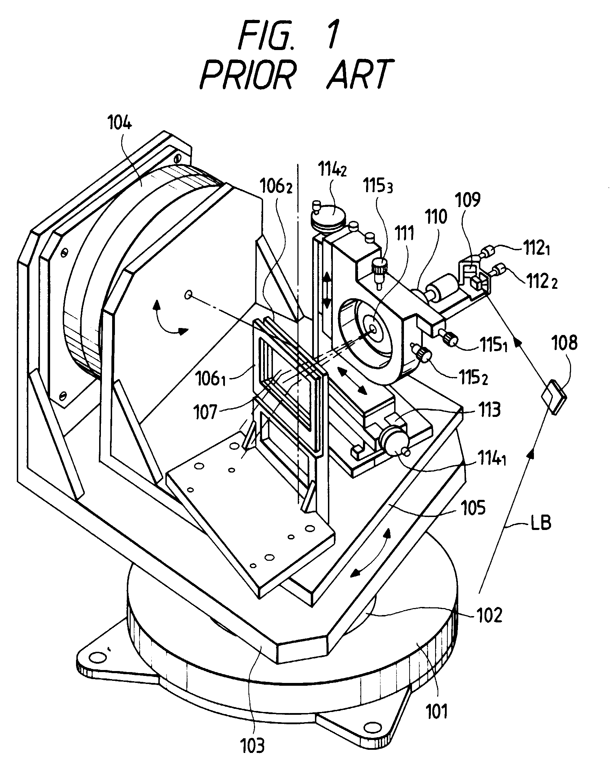

Fig. 1 shows a schematic configuration of a prior art hologram manufacturing apparatus for manufacturing a hologram optical device by the repeatedly exposing method.

This hologram manufacturing apparatus is disclosed in U.S.-A-3,807,829 and comprises a fixing table 101, an L-shaped lateral turn table 103 having a bottom thereof mounted on the fixing table 101 through a lateral turning member 102, a longitudinal turning member 104 mounted on a side of the lateral turntable 103, and an L-shaped exposure table 105 having a side thereof mounted on the longitudinal turning member 104. Two apertured holders 106₁ and 106₂ are fixed to the exposure table 105 to face each other, and a photosensitive material 107 is sandwiched and fixed between the two apertured holders 104₁ and 104₂. When the photosensitive material 107 is to be exposed to a light beam, a laser object beam LB is deflected by first and second movable mirrors 108 and 109 so that it is always directed to a beam expander 110. The laser object beam LB condensed by the beam expander 110 is directed to the photosensitive material 107 through a pin-hole 111. An angle of incidence of the laser object beam LB to the beam expander 110 at the second mirror 109 is adjusted by two angle adjustment knobs 112₁ and 112₂. The beam expander 110 and the pin-hole 111 are mounted on a movable stage 113 which is movable by two coarse adjustment knobs 114₁ and 114₂ and three fine adjustment knobs 115₁ to 115₃ so that the laser object beam LB can be directed to any point on the photosensitive material 107. A reference beam (not shown) is directed to the photosensitive material 107 from the opposite side to the beam expander 110 and the pin-hole 111.

In this hologram manufacturing apparatus, the laser object beam LB and the reference beam interfere to each other on the photosensitive material 107 so that an interference fringe is recorded on the photosensitive material 107. An area of the photosensitive material 107 irradiated by the laser object beam LB and the reference beam is smaller than the area of the photosensitive material 107, and the exposure is repeated while the exposure area of the photosensitive material 107 is changed stepwise. In this manner, the interference fringe is recorded on the entire photosensitive material 107.

In the prior art hologram manufacturing apparatus, however, in order to change the exposure area of the photosensitive material 107 stepwise, the exposure table 105 is rotated by the lateral turning member 102 and the longitudinal turning member 104 to change the angle of incidence of the laser object beam LB and the reference beam to the photosensitive material 107, the first and second mirrors 108 and 109 are rotated to change an essential point light source position of the laser object beam LB (same for the reference beam), and the movable stage 113 is moved horizontally and vertically relative to the exposure table 105 to change the irradiated area of the laser object beam LB (same for the reference beam). It includes the following problems.
(1) Since the irradiated area of the laser object beam LB and the reference beam is moved by mechanical parts and the photosensitive material 107 is also driven together, a positioning error due to vibration easily occurs.
(2) A freedom of design is small because the shapes of the apertured holders 106₁ and 106₂ are not easy to change and a complex shape such as circle or oval is not easy to make.
(3) Since the irradiated area can not be successively removed, discontinuity easily occurs in the interference fringe of the hologram at the boundary of the irradiation areas of the laser object beam LB and the reference beam.

Document US-A-4 964 684 discloses a method and apparatus for producing holographic stereogram images from a sequential series of two dimensional images generated on a liquid crystal matrix instead. In this apparatus a strip hologram H1 is made with a coherent light source such as a laser. The collimated beam from the laser is directed onto a beam splitter, the transmitted beam from which is focused onto a pinhole in a mask by a lens, to form an essential point of light source. Then the light from this light source is projected through the image on the liquid crystal display. The transmitted beam from L1 is brought to a focus by a lens onto a plate. An image on the liquid crystal display matrix is generated by a control means. Additionally, a reference beam is reflected from the beam splitter to a mirror. The beam reflected from the mirror is focused onto a pinhole in a mask by a lens. Then the reference beam from the aperture in the mask is collimated by a lens. A mask is a liquid crystal display matrix and is connected to a control means for generating a transparent vertical slit aperture on the liquid crystal and moving the aperture horizontally and simultaneously in step with the sequential images generated on L1.

Additionally, document US-A-5 040 864 discloses an optical cross-point switch module comprising a spatial light modulator having a plurality of sections switchable between transparent and opaque modes. The switch module includes a thin film waveguide atop a substrate, an array of input optical fibers aligned along one edge of the thin film waveguide, and a similar array of output fibers aligned along a second edge of the waveguide. The waveguide and/or substrate comprise non-linear optical material. Further, a film containing a grating pattern to be written into the non-linear medium as persistent but erasable holograms is placed about the waveguide. The spatial light modulator is positioned above the patterned film and illuminated from above by either coherent or incoherent light. This spatial light modulator functions as selective mask so that a grating pattern on a film can be written as holograms in selected areas of a non-linear medium. The light beam distribution scheme can be switched by changing the masking pattern of the spatial light modulator.

It is an object of the present invention to provide a hologram manufacturing apparatus and a hologram manufacturing method by a repeatedly exposing method, which has good continuity of an interference fringe of a hologram and provide a large freedom of design.

According to the present invention this object is accomplished by a hologram manufacturing apparatus for manufacturing a hologram optical device by a repeatedly exposing method comprising: a light source for emitting a coherent light beam; a beam splitter having a splitting plane which is angularly variable for splitting the light beam emitted from said light source; a first mirror having a reflection plane which is angularly variable for reflecting one of the light beams splitted by said beam splitter; a first variable focal length optical system for converting said one light beam reflected by said first mirror to a light beam having a desired wave front; a first movable table for mounting thereon said first mirror and said first optical system; a second mirror having a reflection plane which is angularly variable for reflecting the other light beam splitted by said beam splitter; a second variable focal length optical system for converting said other light beam reflected by said second mirror to a light beam having a desired wave front; a second movable table for mounting thereon said second mirror and said second optical system; light shield means closely arranged to a photosensitive material to which the lights beams from said first optical system and said second optical system are directed, said light shield means including a spatial light modulator comprising means for changing the light transmissive area and light non-transmissive area in dependence on an input signal; drive means for driving said spatial light modulator by supplying the input signal to said spatial light modulator; and controlling means for controlling an angular orientation of said beam splitter and of the reflection planes of said first and second mirrors, the focal lengths of said first and second optical systems and the relative disposition of said first and second tables and of said input signal to the spatial light modulator.

Furthermore, this object is also accomplished by a hologram manufacturing method for manufacturing a hologram optical device by a repeatedly exposing method, comprising the steps of: emitting a coherent light beam from a light source; splitting said coherent light beam into two light beams having desired directions determined by a beam splitter having a splitting plane which is angularly variable; reflecting one of the light beams by a first mirror having a reflection plane which is angularly variable; converting said one light beam reflected by said first mirror to a light beam having a desired wave front by a first variable focal length optical system; reflecting said other light beam by a second mirror having a reflection plane which is angularly variable; converting said other light beam reflected by said second mirror to a light beam having a desired wave front by a second variable focal length optical system; moving between exposures a first and a second movable table on which said first mirror and said first optical system, and said second mirror and said second optical system, respectively, are mounted so as to direct said light beams to a light shield means closely arranged to a photosensitive material, wherein said light shield means includes a spatial modulator; changing between exposures the light transmissive area and light non-transmissive area in dependence on an input signal supplied to said spatial modulator by a drive means; and controlling during the exposure process the angular orientation of said beam splitter of the reflection planes of said first and second mirrors, the focal lengths of said first and second optical systems and the relative disposition of said first and second tables and of said input signal to the spatial light modulator by a controlling means.
Fig. 1 shows a prior art hologram manufacturing apparatus for manufacturing a hologram optical device by a repeatedly exposing method,
Fig. 2 shows a first embodiment of a hologram manufacturing apparatus of the present invention,
Fig. 3 illustrates an operation of a liquid crystal shutter shown in Fig. 2,
Fig. 4 shows a structure of a liquid crystal device shown in Fig. 2,
Figs. 5A and 5B illustrate operations of manufacturing a hologram optical device by a twice repeatedly exposing method by using the hologram manufacturing apparatus shown in Fig. 2, in which Fig. 5A illustrates an operation of exposing a right half of a photosensitive material and Fig. 5B illustrates an operation of exposing a left half of the photosensitive material,
Fig. 6 shows a schematic configuration of a second embodiment of the hologram manufacturing apparatus of the present invention,
Fig. 7 shows schematic configuration of a third embodiment of the hologram manufacturing apparatus of the present invention,
Fig. 8 shows a structure of a liquid crystal device shown in Fig. 7, and
Fig. 9 shows a schematic configuration of a fourth embodiment of the hologram manufacturing apparatus of the present invention.

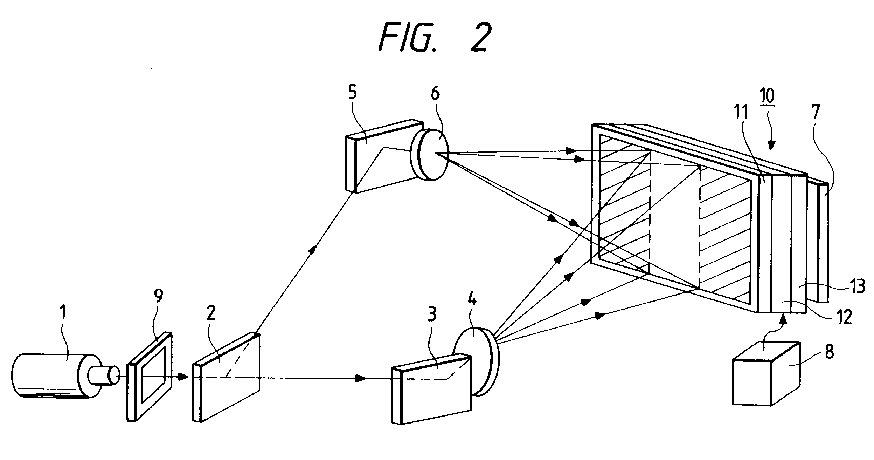

Fig. 2 shows a schematic configuration of a first embodiment of the hologram manufacturing apparatus of the present invention.

The hologram manufacturing apparatus of the present invention repeatedly exposes a transmission type hologram by using a liquid crystal device as a spatial light modulator, and comprises a laser light source 1 for emitting a linearly polarized light beam, a half-mirror 2 for bisecting the linearly polarized light beam emitted from the laser light source 1, a first mirror 3 for reflecting the linearly polarized light beam transmitted through the half-mirror 2, a first objective lens 4 for converting the linearly polarized light beam reflected by the first mirror 3 to a linearly polarized light beam having a desired wave front, a second mirror 5 for reflecting the linearly polarized light beam reflected by the half-mirror 2, a second objective lens 6 for converting the linearly polarized light beam reflected by the second mirror 5 to a linearly polarized light beam having a desired wave front, a liquid crystal shutter 10 to which the linearly polarized light beams are directed from the first and second objective lenses 4 and 6, and a photosensitive material 7 to which each linearly polarized light beam transmitted through the liquid crystal shutter 10 is directed. The liquid crystal shutter 10 comprises a polarizer 11, a liquid crystal device 12 and an analyzer 13, and the liquid crystal device 12 is driven by a driver 8. A mechanical shutter 9 is arranged between the laser light source 1 and the half-mirror 2 so that the light exposure may be stopped during aperture controlling and virtual point light source positioning to be described as below.

The desired wave front is an wave front of a light beam which prevents the occurrence of an aberration when a hologram is reproduced. It depends on conditions of reproduction and may be a scattering light beam or a light beam having a predetermined aberration and the like.

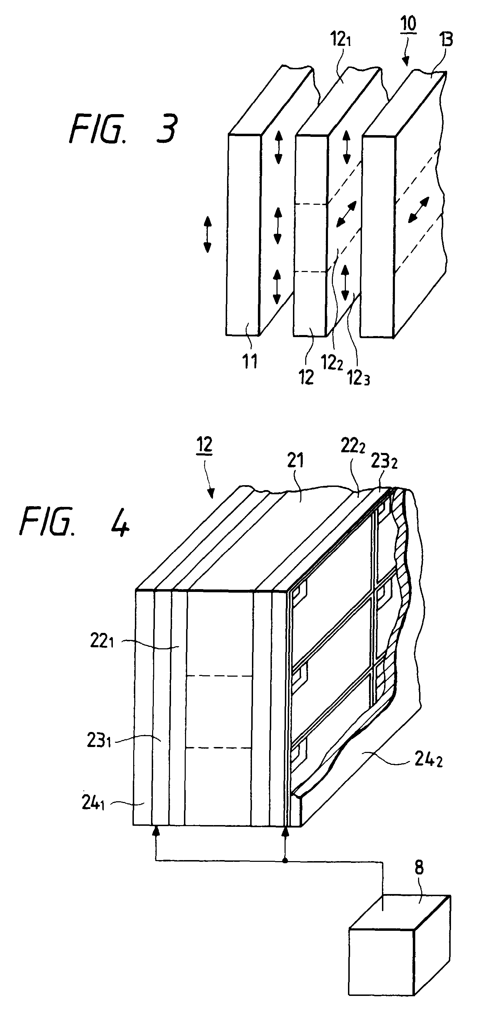

Fig. 3 shows an operation of the liquid crystal shutter 10 shown in Fig. 2.

The polarizer 11 comprises a polarization plate which has a characteristic of transmitting only the linearly polarized light beam (having a direction of polarization along a vertical direction in the drawing) emitted from the laser light source 1 and restoring the original linearly polarized light beam when the polarization state of the each linearly polarized light beam from the first and second objective lenses 4 and 6 is changed by the optical system including the laser light source 1 to the polarizer 11. Namely, the directions of polarization of the each linearly polarized light beam from the first and second objective lenses 4 and 6 is aligned vertically (parallelly to the plane of incidence of the liquid crystal device 12) when those lights pass through the polarizer 11.

The liquid crystal device comprises a general TN liquid crystal which has a property of rotating a direction of polarization of the incident light beam by approximately 90 degrees parallelly to the plane of incidence of the liquid crystal device 12. Accordingly, of the linearly polarized light beams transmitted through the polarizer 11, the light beam directed to an area 12₂ at which an applied voltage to the liquid crystal device 12 is off is converted to a linearly polarized light beam having a direction of polarization as shown and then is directed to the analyzer 13. On the other hand, of the linearly polarized light beams transmitted through the polarizer 11, the light beam directed to areas 12₁ and 12₃ at which the applied voltage of the liquid crystal 12 is on has not the direction of polarization thereof changed and directed to the analyzer 13.

The analyzer 13 comprises a analyzer plate having a property of transmitting only a polarized light beam having a direction of polarization by an arrow as shown. Accordingly of the linearly polarized light beams transmitted through the polarizer 11, only the light beam directed to the off-applied voltage area 12₂ of the liquid crystal device 12 exits from the analyzer 13, and the light beam directed to the on-applied voltage areas 12₁ and 12₃ of the liquid crystal device 12 is blocked by the analyzer 13. On the contrary, when it is designed that through both the polarizer 11 and the analyzer 13 is transmitted the polarized light beam of the same direction of polarization, the light beam directed to the on-applied voltage areas 12₁ and 12₃ exit from the analyzer 13.

Fig. 4 shows a structure of the liquid crystal device 12.

The liquid crystal device 12 comprises a liquid crystal 21, first and second orientation films 22₁ and 22₂ arranged to hold the liquid crystal 21 therebetween for orienting liquid crystal molecules, first and second transparent electrodes 23₁ and 23₂ arranged on the opposite sides of the orientation films 22₁ and 22₂ with respect to the liquid crystal 21, and first and second glass plates 24₁ and 24₂ on the opposite sides with respect to the liquid crystal 21 of the transparent electrodes 23₁ and 23₂. The first and second transparent electrodes 23₁ and 23₂ comprise arrays of the same shape to conform to the decided areas, and applied voltages are supplied to the divided areas from the driver 8. Accordingly, the rotation of the direction of polarization by the liquid crystal 21 disappears only in the area where the applied voltage is supplied from the driver 8, and the light non-transmittance property (incident light blocking property) is attained by a combination with the analyzer 13. Thus, by controlling the applied voltages to be supplied to the transparent electrodes 23₁ and 23₂ to change the areas of the liquid crystal 21 which exhibit the light transmittance and the light non-transmittance, the aperture of the liquid crystal device 12 (that is, the aperture of the liquid crystal shutter 10) can be changed as desired.

The photosensitive material 7 is arranged closely to the liquid crystal shutter 10 to face the liquid crystal shutter 10 as shown in Fig. 2. The photosensitive material 7 is exposed to the two linearly polarized light beams transmitted through the liquid crystal shutter 10 so that an interference fringe is recorded on the photosensitive material 7. Since the liquid crystal shutter 10 is sufficiently thin and the photosensitive material 7 is arranged closely to the liquid crystal shutter 10, even if the linearly polarized light beams directed through the first and second objective lenses 4 and 6 are directed to the photosensitive material 7 at an acute angle, the position and shape of the irradiation of the linearly polarized light beam to the photosensitive material 7 and the position and shape of the aperture of the liquid crystal shutter 10 do not substantially shift from each other. If it is desired to overcome such a slight shift, the shift of the position and shape of the aperture is previously calculated based on the incident angles of the linearly polarized light beams and the thickness of the liquid crystal shutter 10 and these value are input to the driver 8.

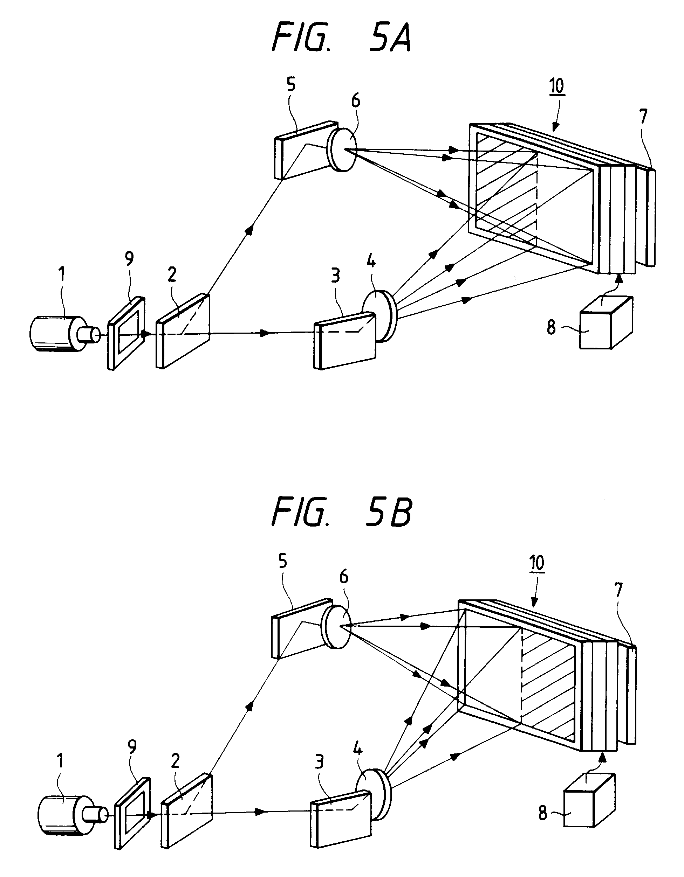

An operation of manufact ring the hologram optical by the twice repeatedly exposing method by using the hologram manufacturing apparatus shown in Fig. 2 is now explained with reference to Figs. 5A and 5B.

When a right half in Fig. 5A of the photosensitive material 7 is to be exposed to record an interference fringe, as shown in the Fig. 5A, the right half of the liquid crystal shutter 10 is opened by the driver 8 and the positions and the angles of the first and second mirrors 3 and 5 and the first and second objective lenses 4 and 6 are changed to direct the linearly polarized light beams emitted from the first and second objective lenses 4 and 6 to the right half of the liquid crystal shutter 10. On the other hand, when the left half of the photosensitive material 7 is to be exposed to record an interference fringe, as shown in Fig. 5B, the left half of the liquid crystal shutter 10 is opened by the driver 8 and the positions and the angles of the first and second mirrors 3 and 5, and the first and second objective lenses 4 and 6 are changed to direct the linearly polarized light beams emitted from the first and second objective lenses 4 and 6 to the left half of the liquid crystal shutter 10. In this manner, the right half and the left half of the photosensitive material 7 can be exposed by the ideal exposure optical system. When the aperture of the liquid crystal shutter 10 is to be changed (aperture controlling) and the positions of the objective lenses 4 and 6 and the mirrors 3 and 5 are to be changed (virtual point light source positioning), the mechanical shutter 9 is closed to prevent the photosensitive material 7 from being exposed.

In the present embodiment, the linearly polarized light beams may be directed to the entire liquid crystal shutter 10 without changing the irradiation area and the irradiation area may be changed by the aperture of the liquid crystal shutter 10. In this case, a desired light beam corresponding to the position of the aperture irradiates the entire liquid crystal shutter 10.

In the hologram manufacturing apparatus of the present embodiment, since the repeated exposing is carried out by using the liquid crystal shutter 10, the positioning error of the irradiation area to the photosensitive material 7 by a vibration due to the movement of the aperture as occurred in the prior art hologram manufacturing apparatus can be prevented.

The polarizer 11 of the liquid crystal shutter 10 may be omitted when there is no disturbance of the direction of polarization of the polarized light beam in the optical system from the laser light source 1 to the liquid crystal shutter 10. When the photosensitive material 7 is irradiated by the polarized light beam having a P-polarized light to the plane of incidence, the contrast of the interference fringe is generally high. Accordingly, the direction of polarization of the linearly polarized light beams emitted from the liquid crystal shutter 10 is preferably normal to the exit plane of the liquid crystal shutter 10 as shown in Fig. 3 rather than parallel to the exit plane of the liquid crystal shutter 10.

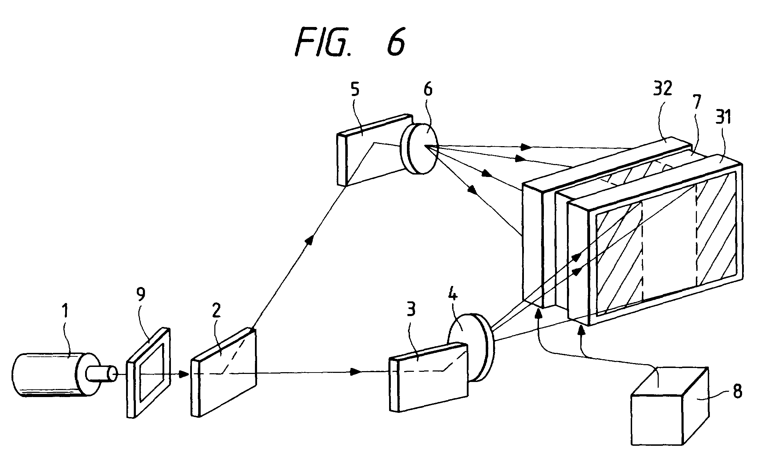

Fig. 6 shows a schematic configuration of a second embodiment of the hologram manufacturing apparatus of the present invention.

The hologram manufacturing apparatus of the present invention repeatedly exposes to a reflection type hologram by using a liquid crystal device as a spatial light modulator. It is different from the hologram manufacturing apparatus of Fig. 2 in that first and second liquid crystal shutters 31 and 32 are arranged to hold a photosensitive material 7 therebetween. A linearly polarized light beam emitted from a first objective lens 4 is directed to the photosensitive material 7 through the first liquid crystal shutter 31, and a linearly polarized light beam emitted from a second objective lens 6 is directed to the photosensitive material 7 through the second liquid crystal shutter 32.

The first and second liquid crystal shutters 31 and 32 have the same structure as that of the liquid crystal shutter 10 shown in Fig. 2, and the apertures thereof are controlled by the driver 8 such that the linearly polarized light beams emitted from the objective lenses 4 and 6 are directed to the same position on the photosensitive material 7 in the same shape. In order to prevent the shift of position of the linearly polarized lights beams directed to the photosensitive material 7 at an acute angle, the first and second liquid crystal shutters 31 and 32 are formed sufficiently thin and arranged closely to the photosensitive material 7.

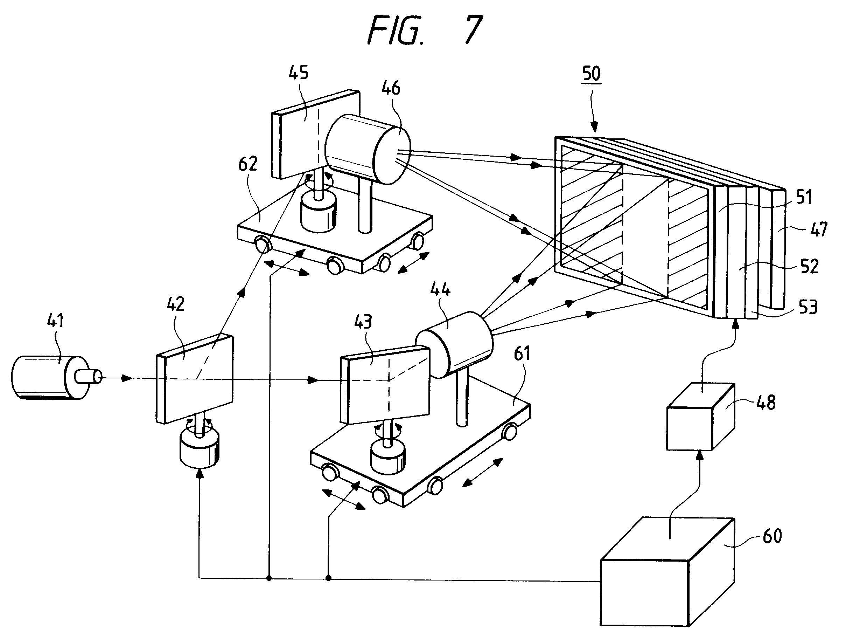

Fig. 7 shows a schematic configuration of a third embodiment of the hologram manufacturing apparatus of the present invention.

The hologram manufacturing apparatus of the present embodiment repeatedly-exposes a transmission type hologram by using a liquid crystal device as the spatial light modulator and eliminates the discontinuity of the interference fringe between split areas.

The hologram manufacturing apparatus of the present embodiment comprises a laser light source 41 for emitting a linearly polarized light beam, a galvano half-mirror 42 rotatable around an axis normal to an optical axis of the linearly polarized light beam for bisecting the linearly polarized light beam emitted from the laser light source 41, a first galvano mirror 43 rotatable around an axis normal to the optical axis of the linearly polarized light beam for reflecting the linearly polarized light beam transmitted through the galvano half-mirror 42, a first zoom lens 44 for converting the linearly polarized light beam reflected by the first galvano mirror 43 to a linearly polarized light beam having a desired wave plane, a first moving table 61 on which the first galvano mirror 43 and the first zoom lens 44 are mounted, a second galvano mirror 45 rotatable around an axis normal to the optical axis of the linearly polarized light beam for reflecting the linearly polarized light beam reflected by the galvano half-mirror 42, a second galvano mirror 45 rotatable around an axis normal to the optical axis of the linearly polarized light beam, second zoom lens 46 for converting the linearly polarized light beam reflected by the second galvano mirror 45 to a linearly polarized light beam having a desired wave plane, a second moving table 62 on which the second galvano mirror 45 and the second zoom lens 46 are mounted, a liquid crystal shutter 50 including a polarizer 51, a liquid crystal device 52 and an analyzer 53, to which the linearly polarized light beams from the first and second zoom lenses 44 and 46 are directed, a photosensitive device 47 to which the linearly polarized light beams transmitted through the liquid crystal shutter 50 are directed, a driver 48 for driving the liquid crystal device 52 and a controller 60 for controlling the rotations of the galvano half-mirror 42 and the first and second galvano mirrors 43 and 45, the focal distances of the first and second zoom lenses 46 and 47 and the movements of the first and second moving tables 61 and 62.

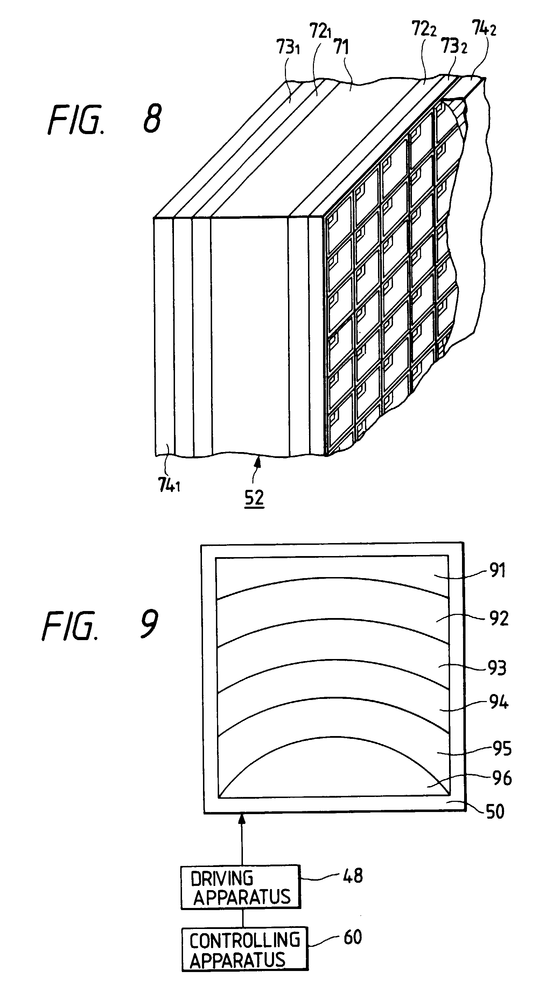

As shown in Fig. 8, the liquid crystal device 52 which is one component of the liquid crystal shutter 50 comprises a liquid crystal 71, first and second orientation films 72₁ and 72₂ for orienting liquid molecules and arranged to sandwich the liquid crystal 71 therebetween, first and second transparent electrodes 73₁ and 73₂ arranged on the opposite sides of the orientation films 72₁ and 72₂ with respect to the liquid crystal 71 and first and second glass plates 74₁ and 74₂ arranged on the opposite sides of the transparent electrodes 73₁ and 73₂ with respect to the liquid crystal, as does the liquid crystal device 12 shown in Fig. 4. The liquid crystal device 52 however differs from the liquid crystal device 12 shown in Fig. 4 in that the first and second transparent electrodes 73₁ and 73₂ for applying voltages to the liquid crystal 71 are finely divided in matrix like a liquid crystal television so that the light transmittance and the light non-transmittance are controlled more finely.

In the hologram manufacturing apparatus of the present embodiment, the discontinuity of the interference fringe is prevented by controlling the aperture of the liquid crystal shutter 50 for defining the divided area and the light exposure by continuously moving the essential point light source position of the linearly polarized light beam directed to the liquid crystal shutter 50 along a locus previously calculated. The essential point light source position is moved by continuously rotating the galvano half-mirror 42, the first galvano mirror 43 and the second galvano mirror 45 by the controller 60 to continuously change the focal distance of the first zoom lens 44 and the focal distance of the second zoom lens 46 and continuously moving the first moving table 61 and the second moving table 62. The aperture of the liquid crystal shutter 50 is controlled by changing a distribution of the applied voltage supplied from the driver 48, by the controller 60.

Fig. 9 shows a schematic configuration of a fourth embodiment of the hologram manufacturing apparatus of the present invention.

In the hologram manufacturing apparatus shown in Fig. 2, the shape of the aperture of the liquid crystal shutter 10 is rectangular as shown in Figs. 5A and 5B. In the hologram manufacturing apparatus as shown in Fig. 7 which has the liquid crystal shutter 50 to permit fine control of the light transmittance and the light non-transmittance, the drive voltage supplied from the driver 48 may be controlled by the controller 60 such that the aperture of the liquid crystal shutter 50 has the first to sixth apertures 91 - 96 shown in Fig. 9 having different radii of arcs. In this manner, freedom of splitting design is remarkably enhanced.

In the above description, with the light shield means closely arranged to the photosensitive material is provided the liquid crystal shutter. Alternatively, the light shield means may be a space modulation device other than the liquid crystal whose light transmittance and light non-transmittance are controlled corresponding to an input signal (a signal supplied from the drive means).

The present invention is not limited to the above embodiments but various modifications thereof may be made without departing from the scope of the present claims.

In accordance with the present invention, the exposure area can be changed as desired in the repeatedly exposing of the hologram. Accordingly, the freedom of design can be made wider and the positioning error of the exposure area due to the vibration is eliminated. Further, since the exposure area may be continuously changed and the states of the wave fronts of the object beam and the reference beam directed to the photosensitive material can be continuously changed in accordance with the exposure area, the continuity of the interference fringe of the hologram can be maintained over the entire photosensitive material.

## Claims

1. A hologram manufacturing apparatus for manufacturing a hologram optical device by a repeatedly exposing method comprising:
a light source (1; 41) for emitting a coherent light beam;
a beam splitter (2; 42) having a splitting plane which is angularly variable for splitting the light beam emitted from said light source (1; 41);
a first mirror (3; 43) having a reflection plane which is angularly variable for reflecting one of the light beams splitted by said beam splitter (2; 42);
a first variable focal length optical system (4; 44) for converting said one light beam reflected by said first mirror (3; 43) to a light beam having a desired wave front;
a first movable table (61) for mounting thereon said first mirror (3; 43) and said first optical system (4; 44);
a second mirror (5; 45) having a reflection plane which is angularly variable for reflecting the other light beam splitted by said beam splitter (2; 42);
a second variable focal length optical system (6; 46) for converting said other light beam reflected by said second mirror (5; 45) to a light beam having a desired wave front;
a second movable table (62) for mounting thereon said second mirror (5; 45) and said second optical system (6; 46);
light shield means (10; 50) closely arranged to a photosensitive material (7; 47) to which the lights beams from said first optical system (4; 44) and said second optical system (6; 46) are directed, said light shield means (10; 50) including a spatial light modulator (12; 52) comprising means for changing the light transmissive area (12₂) and light non-transmissive area (12₁, 12₃) in dependence on an input signal;
drive means (8; 48) for driving said spatial light modulator (12; 52) by supplying the input signal to said spatial light modulator (12; 52); and
controlling means (60) for controlling the angular orientation of said beam splitter (2; 42) and of the reflection planes of said first and second mirrors (3, 5; 43, 45), the focal length of said first and second optical systems (4, 6; 44, 46), the relative disposition of said first and second tables (61, 62) and said input signal to the spatial light modulator.

2. A hologram manufacturing apparatus according to claim 1, wherein said spatial light modulator (12; 52) is a liquid crystal panel.

3. A hologram manufacturing apparatus according to claim 1, wherein said drive means (8; 48) continuously changes the shape of said light transmissive area (12₂).

4. A hologram manufacturing apparatus according to claim 1, wherein said beam splitter (2; 42) is a half mirror.

5. A hologram manufacturing apparatus according to claim 1, wherein said desired wave front corresponds to that of scattered light.

6. A hologram manufacturing apparatus according to claim 1, wherein said desired wave front has a predetermined aberration.

7. A hologram manufacturing apparatus according to claim 1, wherein at least one portion of the boundary line between said light transmissive area (12₂) and said light non-transmissive area (12₁, 12₃) includes a curved line portion.

8. A hologram manufacturing method for manufacturing a hologram optical device by a repeatedly exposing method, comprising the steps of:
emitting a coherent light beam from a light source (1; 41);
splitting said coherent light beam into two light beams having desired directions determined by a beam splitter (2; 42) having a splitting plane which is angularly variable;
reflecting one of the light beams by a first mirror (3; 43) having a reflection plane which is angularly variable;
converting said one light beam reflected by said first mirror (3; 43) to a light beam having a desired wave front by a first variable focal length optical system (4; 44);
reflecting said other light beam by a second mirror (5; 45) having a reflection plane which is angularly variable;
converting said other light beam reflected by said second mirror (5; 45) to a light beam having a desired wave front by a second variable focal length optical system (6; 46);
moving between exposures a first and a second movable table (62) on which said first mirror (3; 43) and said first optical system (6; 46), and said second mirror (5; 45) and said second optical system (6; 46), respectively, are mounted so as to direct said light beams towards a light shield means (10; 50) closely arranged to a photosensitive material, wherein said light shield means (10; 50) includes a spatial modulator (12; 52);
changing between exposures the light transmissive area (12₂) and light non-transmissive area (12₁, 12₃) in dependence on an input signal supplied to said spatial modulator (12; 52) by a drive means (8; 48); and
controlling during the exposure process the angular orientation of said beam splitter (2; 42) and of the reflection planes of said first and second mirrors (3, 5; 43, 45), the focal lengths of said first and second optical systems (4, 6; 44, 46) and the relative disposition of said first and second tables (61, 62) and of said input signal to the spatial light modulator by a controlling means (60).

## Patentansprüche

1. Vorrichtung zum Herstellen eines Hologramms zum Herstellen einer optischen Hologrammeinrichtung durch ein Wiederholungs-Belichtungsverfahren, welches aufweist:
- eine Lichtquelle **(1; 41)** zum Abstrahlen eines kohärenten Lichtstrahls,
- eine Strahlteileinrichtung **(2; 42)** mit einer Teilebene, welche zum Aufteilen des von der Lichtquelle **(1; 41)** abgestrahlten Lichtstrahls winkelveränderbar ist,
- einen ersten Spiegel **(3; 43)** mit einer Spiegelebene, welche zum Reflektieren eines der durch die Strahlteileinrichtung **(2; 42)** geteilten Lichtstrahlen winkelveränderbar ist,
- ein erstes optisches System mit veränderbarer Brennweite **(4; 44)** zum Umwandeln des einen durch den ersten Spiegel **(3; 43)** reflektierten Lichtstrahls in einen Lichtstrahl mit einer gewünschten Wellenfront,
- einen ersten bewegbaren Tisch **(61)**, um darauf den ersten Spiegel **(3; 43)** und das erste optische System **(4; 44)** anzuordnen,
- einen zweiten Spiegel **(5; 45)** mit einer Spiegelebene, welche zum Reflektieren des durch die Strahlteileinrichtung **(2; 42)** geteilten anderen Lichtstrahls winkelveränderbar ist,
- ein zweites optisches System mit veränderbarer Brennweite **(6; 46)** zum Umwandeln des anderen durch den zweiten Spiegel **(5; 45)** reflektierten Lichtstrahls in einen Lichtstrahl mit einer gewünschten Wellenfront,
- einen zweiten bewegbaren Tisch **(62)**, um darauf den zweiten Spiegel **(5; 45)** und das zweite optische System **(6; 46)** anzuordnen,
- eine Lichtabschirmeinrichtung **(10; 50)**, nahe eines lichtempfindlichen Materials **(7; 47)** angeordnet, auf welches die Lichtstrahlen vom ersten optischen System **(4; 44)** und vom zweiten optischen System **(6; 46)** gerichtet sind, die Lichtabschirmeinrichtung **(10; 50)** mit einer räumlichen Lichtmodulationseinrichtung **(12; 52)**, welche eine Einrichtung zum Ändern der Lichtdurchlaßfläche **(12**_{**2**}**)** und der Lichtsperrfläche **(12**_{**1**}**, 12**_{**3**}**)** in Abhängigkeit von einem Eingangssignal aufweist,
- eine Ansteuereinrichtung **(8; 48)** zum Ansteuern der räumlichen Lichtmodulationseinrichtung **(12; 52)** durch Zuführen des Eingangssignals zur räumlichen Lichtmodulationseinrichtung **(12; 52)** und
- eine Steuereinrichtung **(60)** zum Steuern der Winkelausrichtung der Strahlteileinrichtung **(2; 42)** und der Spiegelebenen des ersten und des zweiten Spiegels **(3, 5; 43, 45)**, der Brennweiten des ersten und des zweiten optischen Systems **(4, 6; 44, 46)**, der Relativposition des ersten und des zweiten Tischs **(61, 62)** und des Eingangssignals zur räumlichen Lichtmodulationseinrichtung.

2. Vorrichtung zum Herstellen eines Hologramms gemäß Anspruch 1, wobei die räumliche Lichtmodulationseinrichtung **(12; 52)** eine Flüssigkristalltafel ist.

3. Vorrichtung zum Herstellen eines Hologramms gemäß Anspruch 1, wobei die Ansteuereinrichtung **(8; 48)** die Form der Lichtdurchlaßfläche **(12**_{**2**}**)** stetig ändert.

4. Vorrichtung zum Herstellen eines Hologramms gemäß Anspruch 1, wobei die Strahlteileinrichtung **(2; 42)** ein Halbspiegel ist.

5. Vorrichtung zum Herstellen eines Hologramms gemäß Anspruch 1, wobei die gewünschte Wellenfront jener des gestreuten Lichts entspricht.

6. Vorrichtung zum Herstellen eines Hologramms gemäß Anspruch 1, wobei die gewünschte Wellenfront eine vorbestimmte Aberration aufweist.

7. Vorrichtung zum Herstellen eines Hologramms gemäß Anspruch 1, wobei mindestens ein Abschnitt der Grenzlinie zwischen der Lichtdurchlaßfläche **(12**_{**2**}**)** und der Lichtsperrfläche **(12**_{**1**}**, 12**_{**3**}**)** einen gekrümmten Linienabschnitt aufweist.

8. Verfahren zum Herstellen eines Hologramms zum Herstellen einer optischen Hologrammeinrichtung durch ein Wiederholungs-Belichtungsverfahren, welches die Schritte aufweist:
- Abstrahlen eines kohärenten Lichtstrahls von einer Lichtquelle **(1; 41)**,
- Aufteilen des kohärenten Lichtstrahls in zwei Lichtstrahlen mit den gewünschten Richtungen, welche durch eine Strahlteileinrichtung **(2; 42)** mit einer winkelveränderbaren Teilungsebene bestimmt sind,
- Reflektieren eines der Lichtstrahlen durch einen ersten Spiegel **(3; 43)** mit einer Spiegelebene, welche winkelveränderbar ist,
- Umwandeln des einen durch den ersten Spiegel **(3; 43)** reflektierten Lichtstrahls durch ein erstes optisches System mit veränderbarer Brennweite **(4; 44)** in einen Lichtstrahl mit einer gewünschten Wellenfront,
- Reflektieren des anderen Lichtstrahls durch einen zweiten Spiegel **(5; 45)** mit einer Spiegelebene, welche winkelveränderbar ist,
- Verbinden des anderen durch den zweiten Spiegel **(5; 45)** reflektierten Lichtstrahls mit einem Lichtstrahl, welcher eine gewünschte Wellenfront aufweist, durch ein zweites optisches System mit veränderbarer Brennweite **(6; 46)**,
- Bewegen eines ersten und eines zweiten bewegbaren Tischs **(62)** zwischen den Belichtungen, auf welchen jeweils der erste Spiegel **(3; 43)** und das erste optische System **(6; 46)** sowie der zweite Spiegel **(5; 45)** und das zweite optische System **(6; 46)** so angeordnet sind, daß die Lichtstrahlen zu einer Lichtabschirmeinrichtung **(10; 50)** gerichtet werden, welche nahe einem lichtempfindlichen Material angeordnet ist, wobei die Lichtabschirmeinrichtung **(10; 50)** eine räumliche Lichtmodulationseinrichtung **(12; 52)** einschließt,
- Verändern der Lichtdurchlaßfläche **(12**_{**2**}**)** und der Lichtsperrfläche **(12**_{**1**}**, 12**_{**3**}**)** zwischen den Belichtungen in Abhängigkeit von einem Eingangssignal, welches der räumlichen Lichtmodulationseinrichtung **(12; 52)** durch eine Ansteuereinrichtung **(8; 48)** zugeführt wird, und
- Steuern der Winkelausrichtung der Strahlteileinrichtung **(2; 42)** und der Spiegelebenen des ersten und des zweiten Spiegels **(3, 5; 43, 45)** während des Belichtungsprozesses, der Brennweiten des ersten und des zweiten optischen Systems **(4, 6; 44, 46)** sowie der Relativposition des ersten und des zweiten Tischs **(61, 62)** und des Eingangssignals zur räumlichen Lichtmodulationseinrichtung durch eine Steuereinrichtung **(60)**.

## Revendications

1. Appareil de fabrication d'un hologramme destiné à la fabrication d'un dispositif optique à hologramme par un procédé d'exposition répétée, comportant :
une source de lumière (1 ; 41) destinée à émettre un faisceau de lumière cohérente ;
un diviseur (2 ; 42) de faisceaux présentant un plan de division à angle variable pour diviser le faisceau de lumière émis par ladite source de lumière (1 ; 41) ;
un premier miroir (3 ; 43) ayant un plan de réflexion dont l'angle peut varier pour réfléchir un premier des faisceaux de lumière divisés par ledit diviseur (2 ; 42) de faisceaux ;
un premier système optique (4 ; 44) à longueur focale variable destiné à convertir ledit premier faisceau de lumière réfléchi par ledit premier miroir (3 ; 43) en un faisceau de lumière ayant un front d'onde souhaité ;
une première table mobile (61) sur laquelle sont destinés à être montés ledit premier miroir (3 ; 43) et ledit premier système optique (4 ; 44) ;
un second miroir (5 ; 45) ayant un plan de réflexion dont l'angle peut varier pour réfléchir l'autre faisceau de lumière divisé par ledit diviseur (2 ; 42) de faisceaux ;
un second système optique (6 ; 46) à longueur focale variable pour convertir ledit autre faisceau de lumière réfléchi par ledit second miroir (5 ; 45) en un faisceau de lumière ayant un front d'onde souhaité ;
une seconde table mobile (62) sur laquelle sont destinés à être montés ledit second miroir (5 ; 45) et ledit second système optique (6 ; 46) ;
des moyens (10 ; 50) à écran à lumière disposés à proximité d'une matière photosensible (7 ; 47) sur laquelle sont dirigés les faisceaux de lumière provenant dudit premier système optique (4 ; 44) et dudit second système optique (6 ; 46), lesdits moyens (10 ; 50) à écran à la lumière comprenant un modulateur spatial (12 ; 52) de lumière comportant des moyens destinés à modifier l'aire (12₂) transmissive de la lumière et l'aire (12₁, 12₃) non transmissive de la lumière en fonction d'un signal d'entrée ;
des moyens d'attaque (8 ; 48) destinés à attaquer ledit modulateur spatial (12 ; 52) de lumière en appliquant le signal d'entrée audit modulateur spatial (12 ; 52) de lumière ; et
des moyens de commande (60) destinés à commander l'orientation angulaire dudit diviseur (2 ; 42) de faisceaux et les plans de réflexion desdits premier et second miroirs (3, 5 ; 43, 45), les longueurs focales desdits premier et second systèmes optiques (4, 6 ; 44, 46), la disposition relative desdites première et seconde tables (61, 62) et ledit signal d'entrée appliqué au modulateur spatial de lumière.

2. Appareil de fabrication d'un hologramme selon la revendication 1,
dans lequel ledit modulateur spatial (12 ; 52) de lumière est un panneau à cristaux liquides.

3. Appareil de fabrication d'un hologramme selon la revendication 1,
dans lequel lesdits moyens d'attaque (8 ; 48) modifient en continu la forme de ladite aire (12₂) transmissive de la lumière.

4. Appareil de fabrication d'un hologramme selon la revendication 1,
dans lequel ledit diviseur (2 ; 42) de faisceaux est un demi-miroir.

5. Appareil de fabrication d'un hologramme selon la revendication 1,
dans lequel ledit front d'onde souhaité correspond à celui d'une lumière dispersée.

6. Appareil de fabrication d'un hologramme selon la revendication 1,
dans lequel ledit front d'onde souhaité présente une aberration prédéterminée.

7. Appareil de fabrication d'un hologramme selon la revendication 1,
dans lequel au moins une partie de la ligne limite entre ladite aire (12₂) transmissive de la lumière et ladite aire (12₁, 12₃) non transmissive de la lumière comprend un tronçon de ligne courbe.

8. Procédé de fabrication d'un hologramme pour fabriquer un dispositif optique à hologramme par un procédé d'exposition répétée, comprenant les étapes dans lesquelles :
on émet un faisceau de lumière cohérente à partir d'une source de lumière (1 ; 41) ;
on divise ledit faisceau de lumière cohérente en deux faisceaux de lumière ayant des directions souhaitées déterminées par un diviseur (2 ; 42) de faisceaux ayant un plan de division dont l'angle peut varier ;
on réfléchit un premier des faisceaux de lumière au moyen d'un premier miroir (3 ; 43) ayant un plan de réflexion dont l'angle peut varier ;
on convertit ledit premier faisceau de lumière réfléchi par ledit premier miroir (3 ; 43) en un faisceau de lumière ayant un front d'onde souhaité, au moyen d'un premier système optique (4 ; 44) à longueur focale variable ;
on réfléchit ledit autre faisceau de lumière au moyen d'un second miroir (5 ; 45) ayant un plan de réflexion dont l'angle peut varier ;
on convertit ledit autre faisceau de lumière réfléchi au moyen dudit second miroir (5 ; 45) en un faisceau de lumière ayant un front d'onde souhaité, au moyen d'un second système optique (6 ; 46) à longueur focale variable ;
on déplace, entre des expositions, des première et seconde tables mobiles (62) sur lesquelles sont montés, respectivement, ledit premier miroir (3 ; 43) et ledit premier système optique (6 ; 46), et ledit second miroir (5 ; 45) et ledit second système optique (6 ; 46), afin de diriger lesdits faisceaux de lumière vers des moyens (10 ; 50) à écran à la lumière disposés à proximité d'une matière photosensible, lesdits moyens (10 ; 50) à écran à la lumière comprenant un modulateur spatial (12 ; 52) ;
on fait varier, entre les expositions, l'aire (12₂) transmissive de la lumière et l'aire (12₁, 12₃) non transmissive de la lumière en fonction d'un signal d'entrée appliqué audit modulateur spatial (12 ; 52) par des moyens d'attaque (8 ; 48) ; et
on commande, pendant le processus d'exposition, l'orientation angulaire dudit diviseur (2 ; 42) de faisceaux et des plans de réflexion desdits premier et second miroirs (3, 5 ; 43, 45), les longueurs focales desdits premier et second systèmes optiques (4, 6 ; 44, 46) et la disposition relative desdites première et seconde tables (61, 62) et dudit signal d'entrée appliqué au modulateur spatial de lumière à l'aide de moyens (60) de commande.
